# EUROPEAN PATENT SPECIFICATION

(11) **EP 1 762 890 B1**
(45) Date of publication and mention of the grant of the patent: **28.04.2010**
(21) Application number: 06117710.1
(22) Date of filing: 24.07.2006
(51) Int. Cl.: G03B 17/00, H04N 5/225

(54) **Camera body of a video system with a handgrip and video system therewith**
Kameragehäuse eines Videosystems mit Handgriff und Videosystem
Corps de caméra d'un système vidéo avec poignée et système vidéo

(30) Priority: 07.09.2005 EP 05300722
(43) Date of publication of application: 14.03.2007
(73) Proprietor: Thomson Licensing, 92443 Issy-les-Moulineaux Cedex (FR)
(72) Inventor: Schmit, Erwin, 2517 TM, Den Haag (NL); Duchenne, Milan, 3031 SP, Rotterdam (NL); Bos, Noortje, 5616 NZ, Eindhoven (NL)
(74) Representative: Arnold, Klaus-Peter

(56) References cited:
- US-A- 5 157 512
- US-A- 5 294 988
- US-A- 5 960 156
- US-A1- 2005 024 526
- PATENT ABSTRACTS OF JAPAN vol. 008, no. 155 (E-256), 19 July 1984 (1984-07-19) & JP 59 057580 A (KONISHIROKU SHASHIN KOGYO KK), 3 April 1984 (1984-04-03)

## Description

### BACKGROUND OF THE INVENTION

### FIELD OF THE INVENTION

The present invention is related to a professional camcorder with a handgrip according to the preamble of claim 1. Camcorder of this kind have a camera and a recorder and use camera bodies with at least one handgrip on the top or at one side of the camera body.

### DESCRIPTION OF THE PRIOR ART

A video system known by the applicant, in particular a professional camcorder, has a camera body with a housing, in which a camera and a recorder are integrated, and components, such as an optical system, e.g. a lens unit and an electronic view finder. Other possible components are a screen, e.g. a rotative LCD screen, and a light module, e.g. a lamp. The housing comprises cover elements, namely a bottom cover, a top cover, two side covers, a front cover and a rear cover.

The camera body of the known professional camcorder also includes a handgrip, which is a separate element attached to the top cover. As an attachment, the handgrip has sockets at each end and is fixed by screws. The screws extend through the ends of the handgrip, through the sockets and into the top cover. Such a handgrip requires an excessive amount of work to be manufactured and then assembled to the housing. In addition, some of such handgrips are uncomfortable to use or are aesthetically unappealing to look at.

US-A-2005/0024526 describes a multifunction portable disc with a housing which comprises an image pick-up module and a display unit allowing to use the portable disc also as a video recorder or a camera. A side of the housing has the function of a handgrip. Other conventional video systems are disclosed in US 5 960 156 A and US 5 157 512 A.

### SUMMARY OF THE INVENTION

It is therefore desirable to develop a professional camcorder with a handgrip according to the preamble of claim 1. The handgrip should require less effort to be manufactured and assembled to the housing of the camera body. The handgrip should also be comfortable to use and aesthetically appealing to look at.

According to the invention this is achieved by the features as defined in independent claim 1. Advantageous developments of the invention are specified in the dependent claims.

Two of the cover elements which, in an area of the handgrip, fit together and shape one part of the housing, also shape the handgrip. The two cover elements fit together to shape the part of the housing and also fit together to shape the handgrip. Thus, the handgrip is integrated into the cover elements as well as in the housing of the camera body.

As a result, the handgrip is manufactured simultaneously with the two cover elements. Additionally, the handgrip is automatically created when the two cover elements are fitted together and the part of the housing is made up.

Through the integration of the handgrip into the cover elements, fewer elements need to be manufactured. A separate attachment for the handgrip is no longer necessary. As a result, the manufacturing costs and the assembly time are reduced. The fixation of the handgrip to the housing is much stronger as a fixation with screws, which can come loose.

The part of the housing, on which the handgrip is positioned, is the top cover. The preferable position for the handgrip of a professional camcorder is on the top with the two cover elements shaping the top cover of the housing.

Each of the two cover elements comprise a cover section and a grip section in a way, that the cover sections of the two cover elements shape the part of the housing while the grip sections shape the handgrip.

The grip sections can have the form of a bar, which flows into the cover sections, at each end. The handgrip shaped by the grip sections can stand away from the housing. Alternatively, the part of housing shaped by the cover sections can have the form of a hollow under the handgrip.

The features provide a lot of freedom in defining the shape of the handgrip. Both ergonomic and aesthetic aspects can be taken into account.

Both of the grip sections of the two cover elements create at least one hollow space. For that to happen, the grip sections can have the form of a long dish or a groove. Such hollow spaces provide room for components and further devices, such as electronics.

At least one of the hollow spaces leads to an outer opening in the grip sections, which connects the hollow space with surroundings of the housing. Such hollow spaces provide room for further components, such as an electronic view finder, or for electrical connections, such as for jacks for an USB or a FireWire connection.

At least one of the hollow spaces can lead to an inner opening in the cover sections, which connects the hollow space with an inner space in the housing. This enables a connection of the components and/or the devices arranged in the hollow space with the components and/or the devices in the inner space of the housing.

The inner opening is therefore located in a part of the housing shaped by the cover sections. The inner opening should be covered by the grip sections.

In addition to shaping a top cover and the handgrip, the two cover elements preferably shape two side covers of the housing. For that to happen, each of the two cover elements comprises a side cover section, a top cover section, as the cover section, and a grip section. The number of elements, which need to be manufactured and assembled, is further minimised.

### BRIEF DESCRIPTION OF THE DRAWINGS

The invention will be explained in further detail using one embodiment, which is illustrated in the figures. It shows:
figure 1 a schematic cross-section A-A of a housing of a camera body of the embodiment and
figure 2 a schematic longitudinal section B-B of the housing shown in figure 1.

### DETAILED DESCRIPTION OF AN EMBODIMENT OF THE INVENTION

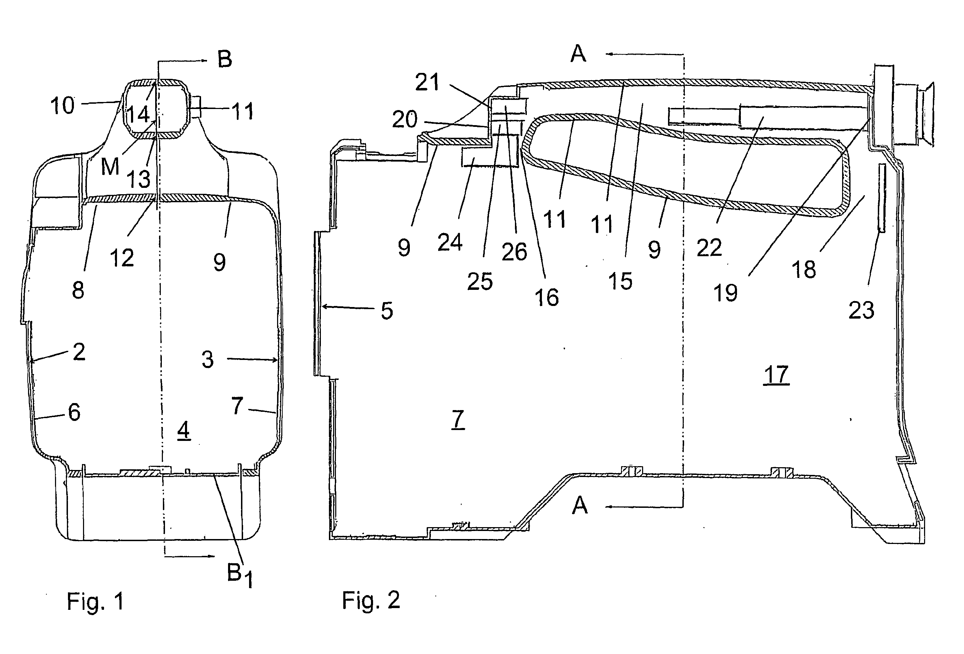

A camera body of an embodiment of the invention has a housing, of which a cross-section is shown in figure 1 and which comprises the following cover elements: a bottom cover 1, two cover elements, one left cover element 2 and one right cover element 3, a front cover, which can not be seen in figure 1, and a rear cover 4. The cover elements 2, 3 are indicated with arrows. The termination of the directions, such as front and rear and also right and left corresponds to the view of the figure 1. Therefore, a lens unit, shown as an arrow 5 in figure 2, is arranged in the rear of the housing.

Each of the cover elements 2, 3 comprises a side cover section 6, 7, a top cover section 8, 9 and a grip section 10, 11.

Figure 1 shows, that the side cover sections 6, 7 of the cover elements 2, 3 fit to the bottom cover 1. The side cover section 6 of the left cover element 2 shape the left side of the housing, while the side cover section 7 of the right cover element 3 shape the right side of the housing. The cover elements 2, 3 are fitted several times to each other in a way, that both top cover sections 8 and 9 of the two cover elements 2, 3 shape the top of the housing, while both grip sections 10, 11 of the two cover elements 2, 3 shape the handgrip.

One of the fittings is the fitting of its top cover section 8, 9 along a first connection line, see arrow 12. Two other fittings are the fittings of its grip sections 10, 11 along a second, lower connection line, see arrow 13 and along a third, upper connection line, see arrow 14. All connection lines pass in the vertical middle plane of the handgrip, see arrow M. The three connection lines and the middle plane extend lengthwise with reference to the handgrip. All connection lines extend parallel to one another.

Alternatively, one or more connection lines can pass beside the vertical middle plane of the handgrip. All connections lines need to pass through the area of the handgrip. They need not to be parallel to one another.

The shape of the two cover elements 2, 3, i.e. the shape of its corresponding sections 6 and 7, 8 and 9, as well as 10 and 11 is similar. The shape of the cover elements 2, 3 will be described with the help of the right cover element 3 shown in figure 2. Figure 2 is a longitudinal section B-B of the housing, taken nearly one mm beside the vertical middle plane of the handgrip. Figure 2 shows in particularly a longitudinal section of the right cover element 3.

By shaping the right side of the housing the side cover section 7 of the right cover element 3 extends in a vertical direction. At its upper edge it turns to the top cover section 9. Both sections 7, 9 nearly form a right angle.

The top cover section 9 nearly extends in a horizontal direction and fits at the first connection line to the top cover section 8 of the left cover element 2.

The grip section 11 of the right cover element 3 has, at least in its middle, the shape of a groove or a long dish. The groove is arranged in a way, that its hollow, i. g. the hollow of grip section 11, is facing a corresponding hollow of the grip section 10 of the left cover element 2. The two hollows of the grooves form a common longitudinal hollow space 15 in the handgrip. The two grooves of the grip sections 10, 11 fit together along the lower and the upper connection lines, see arrows 13, 14 shaping the handgrip and its hollow space 15. In this embodiment with a handgrip on the top of the housing shaped by the cover elements, the widths of the grooves are arranged vertically.

The grip section 11 of the right cover element 3 curves at the rear end, i. e. at the left side of figure 2, to the top cover section 9. The top cover section 9 has an opening in this area. The opening faces a corresponding opening of the top cover section 8 of the left cover element 2. The two openings form a common inner opening 16 in the top of the housing, which connects the hollow space 15 of the handgrip with the inner space 17 of the housing. This inner opening 16 is covered by the grip sections 10, 11.

The grip section 11 of the right cover element 3 curves at its front end, i. e. at the right side of figure 2, in a similar way to the top section 9. A further inner opening 18 in the cover sections 8, 9, which connects the hollow space 15 of the handgrip with an inner space 17 of the housing, is provided. Figure 2 shows, that the front end of the handgrip connects the top of the housing very close to the front of the housing. In this embodiment a part of the grip sections 10, 11 turns into the top cover sections 8, 9 while another part might turn into the side cover sections 6, 7.

The grip section 11 of the right cover element 3 creates outer openings at its front end and at its rear end. Each of this openings faces a corresponding opening of the grip cover section 10 of the left cover element 2. Each pair of corresponding openings form a common outer opening 19, 20, 21, which connect the hollow space 15 of the handgrip with the surroundings.

The grip sections 10, 11 can be widen at its ends. As a result, the handgrip as well as its hollow space 15 are widen in this area.

An electronic view finder 22 is arranged in the front part of the hollow space 15 of the handgrip. The view finder 22 extends horizontally and passes through the outer opening 19. The arrangement of view finder 22 in the handgrip enables a very stable fixation of the view finder 22.

Electronic devices 23, 24, such as PCBs, are positioned in the area of the inner opening 18 and in the area of the inner opening 16.

Further electronic devices 25, 26, such as jacks for an USB connection and for a FireWire connection, are arranged in the hollow space 15 of the handgrip in front of the outer openings 20, 21.

The view finder 22 can be connected with the devices 23 in the inner opening 18, the devices 25, 26 can be connected with the devices 24 in the inner opening 16, as well as all of the components and devices 22, 23, 24, 25, 26 can be connected with devices in the inner space 17 of the housing, not shown in figure 2.

Alternatively, the grip sections 10, 11 can create numerous hollow spaces in the handgrip.

## Claims

1. Professional camcorder with a housing comprising cover elements and with a handgrip , **characterised in that**
two of the cover elements (2, 3) are fitted together and shape a part of the housing and also shape the handgrip, each of the two cover elements (2, 3) comprising a grip section (10, 11) and a cover section with a side cover section (6, 7) and a top cover section (8, 9),
each of the side cover sections (6, 7) shapes one of two sides of the housing and are fitted together,
the top cover sections (8, 9) shape the top cover of the housing and are fitted together,
the grip sections (10, 11) are fitted together and shape the handgrip so that it is positioned on the top of a top cover of the housing, the handgrip standing away from the housing and having the form of a bar,
wherein both grip sections (10, 11) of the two cover elements (2, 3) create at least one hollow space (15) in the handgrip,
the at least one hollow space (15) leads to at least one inner opening (16, 18) in the cover sections,
the at least one inner opening (16, 18) connects the at least one hollow space (15) in the handgrip with an inner space (17) of the housing, and
first electronic devices (23, 24) are positioned in the area of the at least one inner opening (18, 16) or second electronic devices (25, 26) are positioned in the at least one hollow space (15) of the handgrip in front of outer openings (20, 21) formed in the grip sections (10, 11).

2. Camcorder according to claim 1, **characterised in that** at least one of the hollow spaces (15) leads to the outer openings (19, 20, 21) in the grip sections (10, 11) and that the outer openings (19, 20, 21) connect the hollow space (15) of the handgrip with surroundings of the housing.

3. Camcorder according to claim 1 or 2, **characterised in that** a PCB is positioned in the area of the inner opening (18, 16) as the first electronic devices (23, 24).

4. Camcorder according to one of the preceding claims, **characterised in that** as the second electronic devices (25, 26) jacks for an USB connection and for a FireWire connection are arranged in the hollow space (15) of the handgrip in front of the outer openings (20, 21).

5. Camcorder according to one of the preceding claims 2, 3 or 4, **characterised in that** an electronic view finder (22) is arranged in the front part of an hollow space (15) of the handgrip, which extends preferably horizontally and passes through one of the outer opening (19).

## Patentansprüche

1. Professioneller Camcorder mit einem Gehäuse, das Deckelemente umfasst, und mit einem Handgriff, **dadurch gekennzeichnet, dass**
zwei der Deckelemente (2, 3) aneinandergefügt sind und einen Teil des Gehäuses bilden und außerdem den Handgriff bilden, wobei jedes der zwei Deckelemente (2, 3) einen Greifabschnitt (10, 11) und einen Deckabschnitt mit einem seitlichen Deckabschnitt (6, 7) und mit einem oberen Deckabschnitt (8, 9) umfasst,
jeder der seitlichen Deckabschnitte (6, 7) eine der zwei Seiten des Gehäuse bildet und sie aneinandergefügt sind, die oberen Deckabschnitte (8, 9) die obere Abdeckung des Gehäuses bilden und aneinandergefügt sind,
die Greifabschnitte (10, 11) aneinandergefügt sind und den Handgriff so bilden, dass er oben an einer oberen Abdeckung des Gehäuses positioniert ist, wobei der Handgriff von dem Gehäuse absteht und die Form eines Stabs aufweist,
die beiden Greifabschnitte (10, 11) der zwei Deckelemente (2, 3) in dem Handgriff mindestens einen Hohlraum (15) erzeugen,
der mindestens eine Hohlraum (15) zu mindestens einer Innenöffnung (16, 18) in den Deckabschnitten führt,
die mindestens eine Innenöffnung (16, 18) den mindestens einen Hohlraum (15) in dem Handgriff mit einem Innenraum (17) des Gehäuses verbindet, und
in dem Bereich der mindestens einen Innenöffnung (18, 16) erste elektronische Vorrichtungen (23, 24) positioniert sind oder in dem mindestens einen Hohlraum (15) des Handgriffs vor den Außenöffnungen (20, 21) in den Greifabschnitten (10, 11) zweite elektronische Vorrichtungen (25, 26) positioniert sind.

2. Camcorder nach Anspruch 1, **dadurch gekennzeichnet dass** mindestens einer der Hohlräume (15) zu den Außenöffnungen (19, 20, 21) in den Greifabschnitten (10, 11) führt und dass die Außenöffnungen (19, 20, 21) den Hohlraum (15) des Handgriffs mit der Umgebung des Gehäuse verbinden.

3. Camcorder nach Anspruch 1 oder 2, **dadurch gekennzeichnet dass** in dem Bereich der Innenöffnung (18, 16) als die ersten elektronischen Vorrichtungen (23, 24) eine PCB positioniert ist.

4. Camcorder nach einem der vorhergehenden Ansprüche, **dadurch gekennzeichnet, dass** als die zweiten elektronischen Vorrichtungen (25, 26) in dem Hohlraum (15) des Handgriffs vor den Außenöffnungen (20, 21) Buchsen für eine USB-Verbindung und für eine Firewire-Verbindung angeordnet sind.

5. Camcorder nach einem der vorhergehenden Ansprüche 2, 3 oder 4, **dadurch gekennzeichnet, dass** in dem Vorderteil eines Hohlraums (15) des Handgriffs ein elektronischer Sucher (22) angeordnet ist, der vorzugsweise horizontal verläuft und durch eine der Außenöffnungen (19) geht.

## Revendications

1. Caméscope professionnel doté d'un logement comprenant des éléments de couvercle et doté d'une poignée, **caractérisé en ce que**
deux des éléments de couvercle (2, 3) sont ajustés l'un à l'autre, forment une partie du logement et forment également la poignée, chacun des deux éléments de couvercle (2, 3) comprenant une section de préhension (10, 11) et une section de couvercle dotée d'une section de couvercle latérale (6, 7) et d'une section de couvercle supérieure (8, 9),
chacune des sections de couvercle latérales (6, 7) forme un des deux côtés du logement, et ces sections sont ajustées l'une à l'autre,
les sections de couvercle supérieures (8, 9) forment le couvercle supérieur du logement, et sont ajustées l'une à l'autre,
les sections de préhension (10, 11) sont ajustées l'une à l'autre et forment la poignée, de sorte que celle-ci soit positionnée sur la partie supérieure d'un couvercle supérieur du logement, la poignée s'étendant à partir du logement et ayant la forme d'une barre, où les deux sections de préhension (10, 11) des deux éléments de couvercle (2, 3) créent au moins un espace creux (15) dans la poignée,
l'au moins un espace creux (15) mène à au moins une ouverture intérieure (16, 18) des sections de couvercle,
l'au moins une ouverture intérieure (16, 18) fait communiquer l'au moins un espace creux (15) de la poignée avec un espace intérieur (17) du logement, et
des premiers dispositifs électroniques (23, 24) sont positionnés dans la zone de l'au moins une ouverture intérieure (18, 16) ou des deuxièmes dispositifs électroniques (25, 26) sont positionnés dans l'au moins un espace creux (15) de la poignée en face d'ouvertures extérieures (20, 21) formée dans les sections de préhension (10, 11).

2. Caméscope selon la revendication 1, **caractérisé en ce qu'**au moins un des espaces creux (15) mène aux ouvertures extérieures (19, 20, 21) de sections de préhension (10, 11) et que les ouvertures extérieures (19, 20, 21) font communiquer l'espace creux (15) de la poignée avec la zone environnant le logement.

3. Caméscope selon la revendication 1 ou 2, **caractérisé en ce qu'**une carte de circuit imprimé est positionnée dans la zone de l'ouverture intérieure (18, 16) en tant que premiers dispositifs électroniques (23, 24).

4. Caméscope selon une des revendications précédentes, **caractérisé en ce qu'**en tant que deuxièmes dispositifs électroniques (25, 26), des connecteurs pour une connexion USB et pour une connexion FireWire sont agencés dans l'espace creux (15) de la poignée en face des ouvertures extérieures (20, 21).

5. Caméscope selon une des revendications précédentes 2, 3 ou 4, **caractérisé en ce qu'**un viseur électronique (22) est agencé dans la partie avant d'un espace creux (15) de la poignée, lequel s'étend de préférence horizontalement et traverse une des ouvertures extérieures (19).
